# EUROPEAN PATENT APPLICATION

(11) **EP 4 757 418 A1**
(43) Date of publication of application: **10.06.2026**
(21) Application number: 24848555.9
(22) Date of filing: 15.02.2024
(51) Int. Cl.: H04W 36/18, H04W 16/28, H04W 36/08, H04W 72/21, H04W 72/23, H04W 88/02

(54) **TERMINAL DEVICE THAT EXECUTES HANDOVER WITH IMPROVED EFFICIENCY, BASE STATION DEVICE, AND CONTROL METHOD**

(30) Priority: 01.08.2023 JP 2023125628
(71) Applicant: KDDI Corporation, Tokyo 163-8003 (JP)
(72) Inventor: HONG, Jungyeon, Fujimino-shi, Saitama 356-8502 (JP); TAKEDA, Hiroki, Tokyo 163-8003 (JP); OHSEKI, Takeo, Fujimino-shi Saitama 356-8502 (JP); KANNO, Issei, Fujimino-shi Saitama 356-8502 (JP)
(74) Representative: Mathys & Squire
(86) International application number: PCT/JP2024/005143
(87) International publication number: WO 2025/027892

(57) **Abstract**

A terminal device receives, from a connected base station device, setting information of an uplink reference signal for measurement in another base station device that provides a handover-destination candidate cell, and then receives, from the base station device, a command instructing handover to a cell provided by the other base station device, the command including an instruction to transmit the uplink reference signal and information designating a beam to be used for transmitting the uplink reference signal, executes handover to the cell provided by the other base station device based on the command, and transmits the uplink reference signal to the other base station device using the setting information and the information designating the beam, in response to receiving the command from the other base station device and without receiving an instruction to transmit the uplink reference signal from the other base station device.

## Description

### TECHNICAL FIELD

The present invention relates to handover technology in a cellular communication system.

### BACKGROUND ART

In a mobile communication system, as a terminal device moves, handover is performed to switch the cell (base station device) that is the connection destination of the terminal device. Conventionally, after receiving a handover instruction from a base station device, a terminal device performs processing for establishing a connection by establishing synchronization and performing setting processing in a cell to which the connection is to be switched. This processing for switching the connection destination takes a certain amount of time, and the terminal device cannot communicate user data while this processing is being performed. In contrast, in the technique described in NPL 1, a handover-source base station device provides the terminal device with communication parameters in a radio resource control (RRC) layer for connection with another handover-destination base station device, before handover is actually performed. Then, the handover-source base station device transmits a Layer-1 or Layer-2 command instructing switching of the cell to the terminal device at the timing when handover is to be performed. In response to receiving the command, the terminal device executes a random access procedure with the handover-destination base station device, whereby the handover can be completed without performing subsequent local processing at the RRC layer. Such a technique can suppress the deterioration of communication efficiency related to handover.

### CITATION LIST

### NON-PATENT LITERATURE

[NPL 1] 3GPP (registered trademark) document R2-2209255

### SUMMARY OF INVENTION

### TECHNICAL PROBLEM

The present invention provides a technology for further improving communication efficiency when handover is performed.

### SOLUTION TO PROBLEM

A terminal device according to one aspect of the present invention comprises reception means for receiving, from a connected base station device, setting information of an uplink reference signal for measurement in another base station device that provides a handover-destination candidate cell, and then receiving, from the base station device, a command instructing handover to a cell provided by the other base station device, the command including an instruction to transmit the uplink reference signal and information designating a beam to be used for transmitting the uplink reference signal; execution means for executing handover to the cell provided by the other base station device based on the command; and transmission means for transmitting the uplink reference signal to the other base station device using the setting information and the information designating the beam, in response to receiving the command from the other base station device and without receiving an instruction to transmit the uplink reference signal from the other base station device.

A base station device according to one aspect of the present invention comprises receiving means for receiving, from another base station device that provides a handover-destination candidate cell for a connected terminal device, setting information of an uplink reference signal for measurement in the other base station device, and then receiving information designating a beam to be used by the terminal device when the terminal device transmits the uplink reference signal using the setting information; and transmission means for transmitting the setting information to the terminal device, and then, when handing over the terminal device to a cell provided by the other base station device, transmitting a command instructing handover to the cell provided by the other base station device, the command including an instruction to transmit the uplink reference signal and information designating a beam to be used for transmitting the uplink reference signal.

### ADVANTAGEOUS EFFECTS OF INVENTION

According to the present invention, it is possible to improve communication efficiency when handover is performed.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example of a configuration of a wireless communication system.
FIG. 2 is a diagram showing an example of a hardware configuration of an device.
FIG. 3 is a diagram showing an example of a functional configuration of a base station device.
FIG. 4 is a diagram showing an example of a functional configuration of a terminal device.
FIG. 5 is a diagram illustrating an example of a flow of processing executed in the wireless communication system.
FIG. 6 is a diagram illustrating an example of a flow of processing executed in the wireless communication system.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### System Configuration

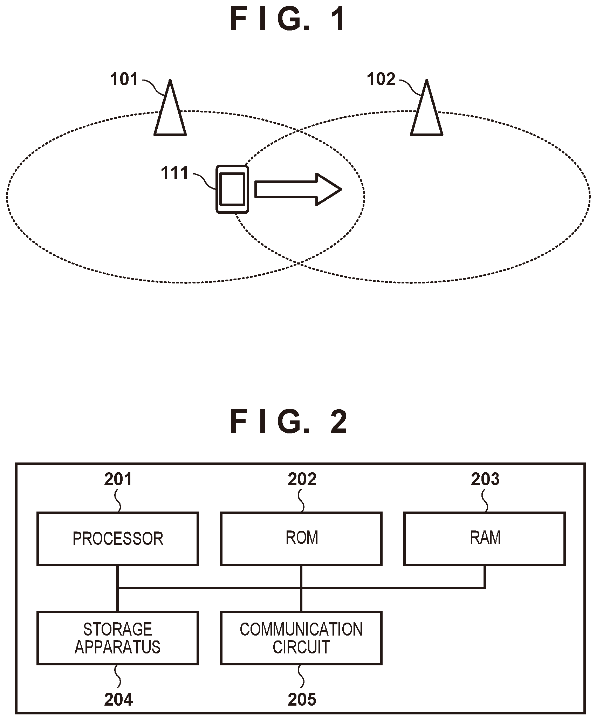

FIG. 1 shows an example of a configuration of a wireless communication system according to this embodiment. The wireless communication system is a cellular communication system configured according to a cellular communication standard, such as the fifth generation (5G) of the 3rd Generation Partnership Project (3GPP (registered trademark)) and successor standards thereof. The wireless communication system includes a base station device 101, a base station device 102, and a terminal device 111. Note that for simplicity of description, FIG. 1 shows only two base station devices and one terminal device, but it goes without saying that a large number of base station devices and terminal devices can be present.

In FIG. 1, the terminal device 111 is about to move from within the range of a cell formed by a base station device 101 into the range of a cell formed by the base station device 102. At this time, the terminal device 111 performs handover for switching the connection-destination base station device from the base station device 101 to the base station device 102.

In this embodiment, it is assumed that a handover procedure for shortening the period of time during which the terminal device 111 is unable to communicate user data due to handover is executed. That is, the handover-source base station device 101 executes setting in the radio resource control (RRC) layer (setting using an RRC message) before actually performing handover of the terminal device 111. That is, in conventional handover, the terminal device 111 receives a handover instruction from the handover-source base station device 101, and the setting in the RRC layer for the handover-destination base station device 102, which is set during the handover processing, is notified to the terminal device 111 prior to the timing when the handover processing is actually to be performed. In this setting, the terminal device 111 is notified of communication parameters to be used in connection and communication with the handover-destination candidate base station device 102. The communication parameters include, for example, beam settings in the handover-destination candidate base station device 102, parameters for executing a random access procedure, and radio resources (frequency and time resources) to be used. In addition, when notification of a plurality of communication parameters to be used for communication with the base station device 102 is performed, an identifier (e.g., RRC-TransactionIdentifier or CondReconfigId) uniquely associated with each communication parameter may be included in the RRC message or setting parameters in the RRC layer notified to the terminal device 111. In this case, CondReconfigId is set for each handover-destination candidate base station device or for each combination of these base station devices. Furthermore, the RRC-TransactionIdentifier may be set when notification of a plurality of communication parameters is performed for each base station device or combination of base station devices. In one example, when CondReconfigId=0 is associated with the base station device 102, which is a handover-destination candidate base station device, and further, notification of a plurality of parameters of the base station device 102 is performed, the RRC-TransactionIdentifier (e.g., 0 and 1) can be set for each of the parameters. In addition, the handover-source base station device 101 can transmit, to the terminal device 111, an instruction to measure the synchronization signal (SS)/physical broadcast channel (PBCH) block (SSB) transmitted from the handover-destination candidate base station device 102. Note that the SSB can be transmitted using beams that are directed in respectively different directions. In this case, a measurement instruction may be transmitted to the terminal device 111 to measure each of the SSBs.

The terminal device 111 measures the SSBs transmitted from the handover-destination candidate base station device 102 in accordance with a measurement instruction from the connected base station device 101. The terminal device 111 then notifies the connected base station device 101 of the measurement result. The base station device 101 may perform notification of the measurement result received from the terminal device 111 to the handover-destination candidate base station device 102 that was the target of measurement. This allows the base station device 102 to specify the approximate direction of the transmission beam to be used for downlink communication (signal transmission) with the terminal device 111 when the terminal device 111 actually performs handover. Note that the terminal device 111 may be capable of setting a plurality of beams usable in downlink communication. In this case, the terminal device 111 can perform SSB measurement using each of the plurality of beams. In this case, the terminal device 111 can specify which of these plurality of beams yields favorable radio quality of the SSB if used, and notify the base station device 101 of the optimal measurement result, for example. Note that the terminal device 111 can store the beam setting by which favorable radio quality has been obtained for each of a plurality of SSBs in association with the identification information of the SSBs. In one example, after the terminal device 111 has performed handover to the base station device 102 or the like, when the base station device 102 transmits a signal using a beam corresponding to a predetermined SSB, the base station device 102 can notify the terminal device 111 of identification information that specifies the predetermined SSB and instruct the terminal device 111 to perform communication using the beam corresponding to the predetermined SSB.

The base station device 102 may further notify the terminal device 111 of a channel state information (CSI) reference signal (RS) transmission setting in order to specify a narrow beam to be used in the downlink. Note that this notification is performed by the base station device 102 notifying the base station device 101 of the CSI-RS transmission setting, and the base station device 101 then transferring the transmission setting to the terminal device 111 that is connected. Upon receiving the transmission setting, the terminal device 111 executes measurement of the CSI-RS transmitted from the base station device 102 (e.g., measurement of the reference signal reception power (CSI-RSRP), reference signal reception quality (CSI-RSRQ), and reception signal strength indicator (CSI-RSSI)) according to the information, and notifies the connected base station device 101 of the measurement result. Then, the base station device 101 transfers the measurement result to the base station device 102. In this way, the base station device 102 can acquire the measurement result of the CSI-RS in the terminal device 111. As a result, before the handover is actually performed, the base station device 102 can determine a narrow beam to be used in downlink communication after the terminal device 111 has performed handover. This makes it possible to omit processing for determining the beam direction in detail after handover is performed, thereby shortening the period of time during which the efficiency of communication of user data of the terminal device 111 decreases.

Note that, as described above, the terminal device 111 may be able to set a plurality of beams usable in downlink communication. In this case, the terminal device 111 can measure the CSI-RS using each of the plurality of beams. In this case, the terminal device 111 can specify which of the plurality of beams yields favorable radio quality of the CSI-RS when used, and can notify the base station device 101 of the optimal measurement result, for example. Note that the base station device 102 can notify the terminal device 111 of the CSI-RS setting for each of a plurality of settable beams, and can cause the terminal device 111 to perform measurement for each of the beams. The terminal device 111 can store the beam settings that yielded favorable radio quality for the CSI-RSs respectively corresponding to the plurality of beams in the base station device 102, in association with the identification information of the CSI-RS. In one example, after the terminal device 111 has performed handover to the base station device 102 or the like, when the base station device 102 transmits a signal using a beam corresponding to a predetermined CSI-RS, the base station device 102 can notify the terminal device 111 of identification information that specifies the predetermined CSI-RS and instruct the terminal device 111 to perform communication using the beam corresponding to the predetermined CSI-RS.

As an example, the above-mentioned CSI-RS transmission setting can be instructed to the terminal device 111 using a CSI-RS measurement setting constituted by a CSI-RS radio resource setting (CSI-RS-Resource) and a reporting setting (csi-ReportConfig) for the base station device 102, which are set in advance in the terminal device 111 as communication parameters before handover. The CSI-RS-Resource includes the time position and frequency position of the radio resource block by which the CSI-RS is transmitted. For example, the terminal device 111 can be instructed to measure the radio resources of the specific CSI-RS by specifying the CSI-RS-Resource using the CSI-RS-Resource id in a Medium Access Control Control Element (MAC CE) and Downlink Control Information (DCI). In addition, in csi-ReportConfig, aperiodic or periodic CSI report timing is set. For example, the terminal device 111 can be instructed to report the measurement result of the CSI-RS at a specific timing by specifying the csi-ReportConfig using the csi-ReportConfig id in the MAC CE or DCI. In addition, when performing the above-described measurement setting for the terminal device 111, the base station device 101 can transmit, to the terminal device 111, for example, a cell identifier or the like included in a MAC CE or DCI, as information that enables the terminal device 111 to specify the base station device to which the CSI-RS transmission setting corresponds.

In addition, before it is determined that handover to the base station device 102 is to be executed, the terminal device 111 executes a random access (RA) procedure. That is, the terminal device 111 can perform processing for establishing uplink synchronization before handover is actually performed. For example, the base station device 101 to which the terminal device 111 is connected transmits an instruction to the terminal device 111 to transmit a random access preamble (RA preamble) to the base station device 102. Then, in accordance with this instruction, the terminal device 111 transmits an RA preamble in the radio resources prepared for the RA procedure in the base station device 102. Note that notification of the information on the radio resources and the sequence used to generate the RA preamble can be performed from the base station device 101 to the terminal device 111 during the RRC layer setting processing described above, for example. In addition, this information may be notified to the terminal device 111 when the base station device 101 issues an instruction to transmit an RA preamble. Through this procedure, the RA preamble transmitted from the terminal device 111 is received by the base station device 102. Then, the base station device 102 can determine a timing advance value (TA value) to be used when the terminal device 111 transmits an uplink signal to the base station device 102. Then, for example, the base station device 102 notifies the base station device 101 to which the terminal device 111 is connected of the TA value, and the base station device 101 notifies the terminal device 111 of the TA value by transferring the TA value to the terminal device 111. As a result, the terminal device 111 can establish uplink synchronization with the base station device 102 at the time when the base station device 101 instructs the terminal device 111 to perform handover to the base station device 102, and therefore the terminal device 111 transmit uplink user data to the base station device 102 without executing the RA procedure again.

Thereafter, the base station device 101 can notify the terminal device 111 to execute handover at a predetermined trigger, such as when the reception quality of the radio signal from the base station device 101 at the terminal device 111 deteriorates by a predetermined level compared to the reception quality of the radio signal from the base station device 102. This notification can be performed using a command that can be called a Cell switch command. This command can be transmitted using the Medium Access Control Control Element (MAC CE) or the Downlink Control Information (DCI). Note that this command includes identification information of the cell formed by the handover-destination base station device 102. In addition, if a plurality of settings are set in the RRC layer used for communication with the base station device 102, an identifier (e.g., RRC-TransactionIdentifier or CondReconfigId) uniquely associated with each setting in the RRC layer may be included in this command. In addition, information regarding the beam that was determined by the base station device 102 and notified to the base station device 101 based on measurements of the SSB and CSI-RS performed in advance as described above may be notified from the base station device 101 to the terminal device 111. The terminal device 111 changes the connection destination from the base station device 101 to the base station device 102 in response to receiving a command specifying the handover-destination base station device 102 from the base station device 101. In this case, since the RA procedure has already been executed as described above, there is no need to execute a new RA procedure. In addition, as described above, since the CSI-RS is measured before the handover, there is no need to re-determine the narrow beam to be used in downlink communication after the handover. For this reason, the terminal device 111 can communicate user data with the base station device 102 immediately after the handover. In addition, if handover is successful after receiving the command, the terminal device 111 can notify the base station device 102 of the success in an uplink control message such as an RRC message of RRC Reconfiguration Complete or a MAC CE. In this case, the terminal device 111 may include an identifier (e.g., an RRC-TransactionIdentifier or a CondReconfigId) associated with the communication parameters used for communication with the base station device 102 in the RRC message.

On the other hand, at this point in time, the narrow beam to be used in uplink communication has not been determined, and further setting processing is required to use such a narrow beam. When setting a narrow beam to be used in uplink communication, the terminal device 111 transmits a sounding reference signal (SRS), and the handover-destination candidate base station device 102 measures the SRS. Then, based on the measurement result, the base station device 102 can determine a beam to be used when receiving an uplink signal transmitted from the terminal device 111 in communication after handover of the terminal device 111. Conventionally, such SRS transmission and uplink beam determination are performed by transmitting an SRS transmission instruction from the handover-destination base station device 102 to the terminal device 111 after handover is completed. For this reason, it takes a long time from the completion of handover until the narrow beam for uplink communication is determined, and it is assumed that communication efficiency during that time will be insufficient. In this embodiment, in consideration of such circumstances, an SRS transmission instruction is transmitted from the base station device 101 to the terminal device 111 while the terminal device 111 is connected to the base station device 101 before handover. This makes it possible to shorten the amount of time until uplink communication using a narrow beam becomes possible after handover is completed.

For example, the base station device 101 can transmit, to the terminal device 111, a signal instructing transmission of the SRS in the above-mentioned command (Cell switch command). In addition, the base station device 101 may transmit, to the terminal device 111, a signal instructing transmission of the SRS before the above-mentioned command is issued. In response to receiving this instruction signal, the terminal device 111 transmits the SRS based on the SRS setting for the base station device 102 notified in advance. Accordingly, the beam to be used in uplink communication can be determined earlier than when the SRS is transmitted according to an instruction from the handover-destination base station device 102 after the handover is completed.

The SRS setting is notified from the base station device 101 to the terminal device 111, for example, when the RRC layer is set for the handover-destination base station device 102 as described above. Note that this is an example, and the SRS setting may be performed separately from the RRC layer setting. This SRS setting information is notified from the base station device 102 to the base station device 101, and the base station device 101 can notify the terminal device 111 of the notified setting information. The SRS setting includes the number of ports on which the SRS is transmitted, an SRS transmission periodicity, a number of OFDM symbols, parameters related to an SRS bandwidth, parameters related to SRS hopping, a frequency-domain position of the SRS, a cyclic shift, a subcarrier spacing at which the SRS is transmitted, and an identifier of a sequence used to generate the SRS. The number of SRS ports indicates the number of SRSs transmitted in parallel, and is selected from 1, 2, or 4, for example. The SRS transmission periodicity includes information designating, for example, periodic, aperiodic, or semi-persistent. Note that when periodic or semi-persistent is designated, the SRS transmission periodicity further includes information in which the time period and the time offset from a predetermined timing are designated in slot units, for example. In the following description, it is assumed that semi-persistent is specified and the SRS is transmitted from the terminal device 111 periodically over a certain period of time. However, this is only one example, and the following discussion can also be applied to the case where periodic or aperiodic is designated. The number of OFDM symbols indicates the number of OFDM symbols in which the SRS is transmitted consecutively, and can be selected from, for example, one symbol, two symbols, or four symbols. The parameters related to the SRS bandwidth, the parameters related to SRS hopping, and the position of the SRS in the frequency domain are parameters that enable the frequency-time resource on which the SRS is transmitted to be specified using, for example, a table or a calculation formula specified in the standard. The identifier of the sequence used for cyclic shift and SRS generation is used when generating the SRS signal sequence by shifting a known sequence used for SRS generation by the amount of time indicated by the cyclic shift. The subcarrier interval at which the SRS is transmitted is set to 2, 4, or the like, and indicates that the SRS is transmitted at frequency intervals of 2 or 4 subcarriers.

Note that there may be a plurality of SRS settings, and when designating one of the plurality of settings, identification information such as SRS Resource Setid or srs-Resourceid is used. That is, between a base station device and a terminal device, an SRS Resource Set associated with one or more srs-Resourceids is defined, one or more SRS Resource Sets are prepared, and one of them can be designated using the SRS Resource Setid or srs-Resourceid. In one example, when two SRS Resource Sets are prepared and four pieces of setting information are prepared for each SRS Resource Set, srs-Resourceid=1 to 4 can be allocated to SRS Resource Set=0, and srs-Resourceid=1 to 4 can be assigned to SRS Resource Set=1. For example, when the base station device 101 issues an instruction to transmit an SRS by designating one of the settings, the base station device 101 designates the SRS Resource Set and srs-Resourceid, thereby enabling the terminal device 111 to transmit the SRS using the setting information corresponding to the designated identification information. In addition, when the Cell switch command instructs transmission of an SRS, the SRS setting can be set in advance as part of the communication parameters used for connection and communication with the handover-destination candidate base station device 102. In addition, if an instruction to transmit an SRS is issued before the Cell switch command is transmitted or received, the SRS settings can be set in advance as part of the communication parameters used for connection and communication with the handover-source base station device 101.

The above-mentioned SRS settings can further include configuration information of the beam that the terminal device 111 is to use. For example, the beam to be used in the terminal device 111 can be designated by a TCI (Transmission Configuration Indicator). For example, information indicating whether or not each of the plurality of beams available to the terminal device 111 will be used to transmit the SRS (or whether to activate or deactivate the setting information for forming each of the plurality of beams) can be notified to the terminal device 111 as the SRS setting. In this case, in one mode, activation or deactivation of the TCI state can be designated using the TCI corresponding to each of the plurality of beams, thereby indicating whether or not the beam corresponding to each TCI will be used for transmitting the SRS.

Also, instead of using the TCI, information for specifying the spatial relationship for determining the transmission beam of the SRS may be used. In this case, for example, an SP SRS Resource Set ID or a Resource ID can be used as a parameter indicating the setting information. The Resource ID can include information for specifying the spatial relationship for determining the transmission beam of each SRS. The information for specifying the spatial relationship is, for example, any one of an NZP CSI-RS resource index, an SSB index, and an SRS resource index. This spatial relationship will be described below. For example, as described above, when the terminal device 111 receives the SSB or CSI-RS transmitted in each of the plurality of beams formed by the base station device 102, the terminal device 111 may store its own beam that yields favorable radio quality, in association with the identification information of the SSB or CSI-RS. In this case, the base station device 102 can indirectly designate the beam to be used in the terminal device 111 by designating the identification information of the SSB or CSI-RS. For example, based on the reception radio quality of the reported SSB or CSI-RS at the terminal device 111, the base station device 102 specifies which of the plurality of beams that can be formed by the base station device 102 is to be used to perform (downlink) communication with favorable quality. Then, the base station device 102 notifies the terminal device 111 of the identification information (NZP CSI-RS resource index, SSB index) of the SSB or CSI-RS transmitted using the beam that yields favorable radio quality measurement results, and transmits an instruction to the terminal device 111 to transmit the SRS using the beam of the terminal device 111 that is stored in association with that identification information. For example, when the uplink and downlink channel characteristics are identical (symmetrical) (e.g., when time division duplexing (TDD) is used), a method of designating the beam of the terminal device 111 using identification information of the SSB or CSI-RS is effective. In addition, by designating an SRS resource index, the base station device 102 can instruct the use of the same beam as another SRS designated using the SRS resource index. In other words, when an SSB or CSI-RS is set in the spatial relationship of a Resource ID, the terminal device will transmit the SRS using the same spatial domain filter as the spatial domain filter used to receive the SSB or CSI-RS, and when a different SRS is set in the spatial relationship of a Resource ID, the terminal device will transmit the SRS using the same spatial domain filter as that used to transmit the different SRS.

For example, when the first CSI-RS is transmitted, the radio quality of the first CSI-RS on a beam for which TCI=n among the plurality of beams of the terminal device 111 becomes a sufficiently high value, and the value of the radio quality is notified to the base station device 102 via the base station device 101. Also, for example, when the second CSI-RS is transmitted, the radio quality of the second CSI-RS in the beam for which TCI=m among the plurality of beams of the terminal device 111 becomes a sufficiently high value, and the value of the radio quality is notified to the base station device 102 via the base station device 101. Here, it is assumed that the terminal device 111 stores the identification information of the first CSI-RS and TCI=n in association with each other, and further stores the identification information of the second CSI-RS and TCI=m in association with each other. In this case, due to the terminal device 111 being notified of an SRS setting indicating that the SRS is to be transmitted using a beam corresponding to the first CSI-RS, when the setting is used, the terminal device 111 will transmit the SRS using a beam for which TCI=n. In addition, due to the terminal device 111 being notified of an SRS setting indicating that the SRS is to be transmitted using a beam corresponding to the second CSI-RS, when the setting is used, the terminal device 111 will transmit the SRS using a beam for which TCI=m.

When the terminal device 111 is notified of an SRS transmission instruction using a Cell switch command, information that is to be notified to the terminal device 111 in a conventional SP SRS Activation/Deactivation MAC CE can be notified within the command. Note that MAC CE stands for Medium Access Control Control Element. This information can be used to replace the beam setting if the beam setting has been performed in advance as SRS setting information, for example. For example, if setting is performed such that the SRS is transmitted using a beam corresponding to a specific SSB in the SRS setting information notified during the RRC layer setting as described above, the setting can be changed in this information such that the SRS is transmitted using a beam corresponding to another SSB or CSI-RS or a beam used for another SRS. Note that in this case, the terminal device 111 can transmit the SRS by changing only the transmission beam according to the information, and using the values before the change for other settings (frequency position, sequence, etc.). In this case, the Cell switch command can include, as information for designating the SRS resources to be used for SRS transmission, the cell identifier of the cell including the SRS resources (SRS Resource Set's Cell ID), bandwidth part identifier (SRS Resource Set's BWP ID), SRS Resource Set ID, and Resource ID, and, as information for specifying the SRS beam, the NZP CSI-RS resource index, SSB index, and SRS resource index. Also, at this time, if it is necessary to designate the beam of the SRS using a reference signal of another cell (if a reference signal of another cell is used for spatial relationship derivation), the cell identifier (Resource Serving Cell ID) and bandwidth part identifier (Resource BWP ID) of the cell containing the signal to be referenced to specify the transmission beam can also be included in the command. Note that this MAC CE can be used when DL/UL separate TCI is used. On the other hand, when Unified TCI is used, SP/AP SRS TCI State Indication MAC CE or Serving Cell Set based SRS TCI State Indication MAC CE can be used. Accordingly, in an environment where Unified TCI is used, information that is to be notified to the terminal device 111 in an SP/AP SRS TCI State Indication MAC CE or Serving Cell Set based SRS TCI State Indication MAC CE can be notified in a Cell switch command. In this case, the Cell switch command can include, as information for designating the SRS resources to be used for SRS transmission, the cell identifier of the cell containing the SRS resources (SRS Resource Set's Cell ID), bandwidth part identifier (SRS Resource Set's BWP ID), SRS Resource Set ID, and Resource ID, and as information for specifying the SRS beam, the TCI state ID. Also, at this time, if it is necessary to designate the beam of the SRS using the TCI state of another cell (if a reference signal of another cell is used for spatial relationship derivation), the cell identifier (TCI State Serving Cell ID) and bandwidth part identifier (TCI State BWP ID) of the cell containing the signal to be referenced to specify the transmission beam can also be included in the command.

Note that, for example, a similar MAC CE may be transmitted to the terminal device 111 also when an instruction to transmit an SRS is issued before a Cell switch command is transmitted or received. Note that the SP SRS Activation/Deactivation MAC CE and the SP/AP SRS TCI State Indication MAC CE may be transmitted from the base station device 102 to the terminal device 111 via the base station device 101 before the handover, or another MAC CE may be newly defined. However, in this case, since the Cell switch command has not yet been transmitted or received, information indicating which base station device is the transmission destination of the SRS is notified by, for example, the MAC CE. In response to receiving the MAC CE, the terminal device 111 can start transmitting the SRS for the designated handover-destination candidate base station device (e.g., the base station device 102) using the beam specified by the MAC CE, and based on the SRS transmission setting notified in advance for another setting.

Alternatively, the terminal device 111 may be instructed to transmit the SRS by specifying the beam to be used, for example, using a physical downlink control channel (PDCCH)/downlink control information (DCI) instead of a MAC CE. For example, by newly defining an SRS transmission instruction using a PDCCH order, the terminal device 111 can be notified of an instruction to transmit an SRS for the handover-destination candidate base station device 102. This notification by the PDCCH/DCI also designates the beam to be used, whereby the beam designated in advance when the RRC layer was set is not used, and the SRS is transmitted using the beam newly notified by the PDCCH/DCI. Note that even if the PDCCH/DCI is used, when an instruction to transmit an SRS is issued before a Cell switch command is transmitted or received, the terminal device 111 is notified of identification information indicating a handover-destination candidate base station device that is the SRS transmission destination. That is, if SRS transmission is instructed when a Cell switch command is transmitted or received, the command designates the handover-destination base station device, but since the handover destination has not been determined before the command is transmitted or received, the command also designates the SRS transmission destination. Note that the terminal device 111 may also be notified of information designating the SRS transmission destination in the Cell switch command. Note that in this case, the SRS transmission destination is the handover-destination base station device, but if, for example, the RRC layer setting has been completed for another base station device that will be a handover-destination candidate after the handover, information designating the other base station device may also be included. In this case, immediately after the handover, the terminal device 111 can transmit an SRS to a further handover-destination candidate base station device.

As described above, the base station device 102 measures the SRS transmitted from the terminal device 111 in response to the issuance of an SRS transmission instruction from the base station device 101 to the terminal device 111 immediately after or before the handover of the terminal device 111. As a result, the base station device 102 can determine which beam the terminal device 111 is to use in uplink communication after the terminal device 111 connects to the base station device 102 through handover. Note that the base station device 102 measures each SRS that is based on the respective plurality of settings and identifies the SRS setting with which communication quality that satisfies a predetermined standard can be obtained, for example. The base station device 102 can then specify which beam to use when transmitting uplink user data, for example, by using identification information of the SRS transmission setting (e.g., SRS Resource Setid and srs-Resourceid). In addition, the base station device 102 may designate an indicator (index) that can specify the resource on which the SRS was transmitted. In this case, the terminal device 111 specifies one setting used when transmitting the SRS based on the designated identification information, indicator, or the like. Then, the terminal device 111 transmits a physical uplink shared channel (PUSCH) including user data, using a beam designated by the information included in that one setting. Note that the base station device 102 may designate a beam using the TCI or identification information of the SSB or CSI-RS. When TCI is designated, the terminal device 111 transmits user data using a beam corresponding to that TCI. In addition, when the terminal device 111 receives identification information of the SSB or CSI-RS, the terminal device 111 transmits user data using a beam stored in association with the identification information. In addition, the beam to be used for PUSCH transmission may be designated for the terminal device using parameters for specifying a transmission beam that is uniquely determined by the TCI or the identification information of the SSB or CSI-RS, such as an SRS resource indicator, or Precoding information and number of layers (TPMI). Note that the beam designation is notified to the terminal device 111 by, for example, the DCI. This DCI may be, for example, a DCI of format 0_1.

Note that in the above-described embodiment, an example has been described in which an SRS transmission instruction is transmitted and received by a MAC CE or DCI. Similarly, an instruction to stop SRS transmission can be transmitted and received by a MAC CE or DCI. Note that switching of the beam used when transmitting the SRS and the like may also be instructed by the MAC CE or DCI.

As described above, in this embodiment, it is possible for the terminal device 111 to quickly use a narrow beam in uplink communication after executing handover (cell switch). This makes it possible to improve the efficiency of communication.

In addition, in the above-described embodiment, an example has been described in which information regarding beam control of the SRS is included in the Cell switch command, but information regarding beam control of the PUCCH may also be included in the command. In this case, information that is to be notified to the terminal device 111 in a conventional PUCCH spatial relation Activation/Deactivation MAC CE can be notified in the Cell switch command. For example, using a Cell switch command, the cell identifier (Serving Cell ID) of the cell containing the PUCCH, the bandwidth part identifier (BWP ID), the PUCCH Resource ID, information regarding the PUCCH beam, and the active/inactive information of each PUCCH Spatial Relation Info set for each PUCCH-SpatialRelationInfoId are included. Before receiving the Cell switch command, one or more pieces of PUCCH Spatial Relation Info are set in advance in the terminal device 111 for each PUCCH-SpatialRelationInfoId, and information on a reference signal for determining a beam when transmitting a PUCCH, such as an NZP CSI-RS resource index, an SSB index, or an SRS resource index, is set in the PUCCH Spatial Relation Info. As a result, the terminal device 111 can specify the beam to be used for transmitting the PUCCH by using the active/inactive information included in the Cell switch command.

In addition, in the above-described embodiment, an example has been described in which information relating to uplink beam control is included in the Cell switch command, but information relating to downlink beam control may also be included in the command. If the Cell switch command includes information relating to beam control for a downlink channel, a PDSCH, and a PDCCH, information that is to be notified to the terminal device 111 in a conventional TCI States Activation/Deactivation for UE-specific PDSCH MAC CE, an Enhanced TCI States Activation/Deactivation for UE-specific PDSCH MAC CE, and a TCI State Indication for UE-specific PDCCH MAC CE can be notified in the command. For example, the Cell switch command can be used to perform an activation/deactivation setting of the TCI state used for communication of the PDCCH or PDSCH using a designated cell identifier (Serving Cell ID) and bandwidth part identifier (BWP ID).

### Device Configuration

Next, an device configuration will be described. FIG. 2 shows an example of a hardware configuration of the base station device and the terminal device of this embodiment. In one example, the base station device and the terminal device include a processor 201, a ROM 202, a RAM 203, a storage device 204, and a communication circuit 205. The processor 201 is a computer that includes one or more processing circuits, such as a general-purpose CPU (Central Processing Unit) or an ASIC (Application Specific Integrated Circuit), and executes the overall processing of the device and the above-described processing by reading and executing programs stored in the ROM 202 or the storage device 204. The ROM 202 is a read-only memory that stores information such as programs and various parameters related to the processing executed by the base station device and the terminal device. The RAM 203 is a random access memory that functions as a workspace when the processor 201 executes a program and also stores temporary information. The storage device 204 is constituted, for example, by a removable external storage device. The communication circuit 205 is constituted, for example, by a circuit for wireless communication of 5G and successor standards thereof. Note that although one communication circuit 205 is shown in FIG. 2, the base station device and the terminal device can have a plurality of communication circuits. For example, the base station device and the terminal device may have wireless communication circuits for 5G and successor standards thereof, respectively, and a common antenna for these circuits. Note that the base station device and the terminal device may have separate antennas suitable for each standard. In addition, the base station device can further include a wired communication circuit used when communicating with other base station devices or nodes in a core network. The terminal device may further include a communication circuit that conforms to a wireless communication standard other than a cellular communication standard, such as a wireless local area network (LAN) or Bluetooth (registered trademark). Note that the base station device and the terminal device may have separate communication circuits 205 for each of a plurality of usable frequency bands, or may have a common communication circuit 205 for at least some of these frequency bands.

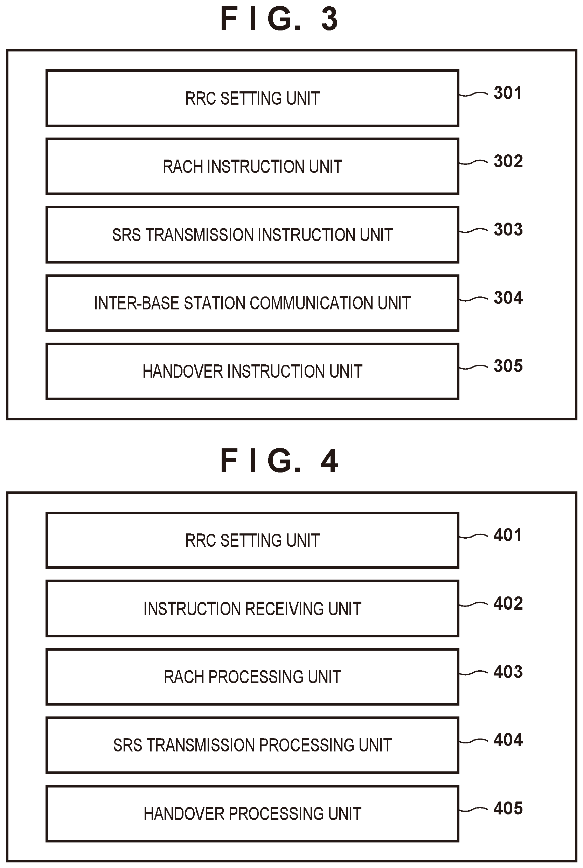

FIG. 3 shows an example of a functional configuration of a base station device. The base station device includes, for example, an RRC setting unit 301, a RACH instruction unit 302, an SRS transmission instruction unit 303, an inter-base station communication unit 304, and a handover instruction unit 305. Note that FIG. 3 mainly shows the functions of the base station device 101 to which the terminal device 111 is connected. The handover-destination candidate base station device 102 is the same as a conventional base station device except that it transmits information related to SRS transmission to the base station device 101 in some cases, and is therefore not shown here. In addition, FIG. 3 shows only functions particularly related to this embodiment, and does not show various other functions that the base station device can have. For example, it goes without saying that the base station device has other functions that base station devices compliant with 5G, successor standards thereof, and the like generally have. In addition, the functional blocks in FIG. 3 are shown schematically, and the respective functional blocks may be realized as an integrated whole, or may be further subdivided. In addition, each function in FIG. 3 may be realized, for example, by the processor 201 executing a program stored in the ROM 202 or the storage device 204, or may be realized, for example, by a processor present inside the communication circuit 205 executing predetermined software. Note that the details of the processing executed by each functional unit will not be described here, but only the general functions thereof will be outlined.

The RRC setting unit 301 notifies, for example, the connected terminal device of RRC-layer setting information for another handover-destination candidate base station device that provides a neighboring cell. For example, the RRC setting unit 301 transmits a handover request to another handover-destination candidate base station device, acquires communication setting information from the other base station device, and notifies the terminal device of the communication setting information by an RRC-layer message. The RRC-layer message is an RRC Reconfiguration message. Then, due to receiving the RRC Reconfiguration Complete message from the terminal device, the RRC setting unit 301 performs connection processing setting between the terminal device and another base station device. Note that the RRC layer setting information can include an SRS transmission setting. The RACH instruction unit 302 instructs the terminal device, which has completed the RRC layer setting for the other handover-destination candidate base station device, to transmit an RA preamble to the other base station device. Then, the RACH instruction unit 302 receives, for example, the TA value specified in the base station device 102 from the base station device 102, and notifies the terminal device of the TA value, thereby completing the RA procedure.

The SRS transmission instruction unit 303 notifies the terminal device, for which the RRC layer setting for another handover-destination candidate base station device is complete, of the SRS transmission instruction for the other base station device. The SRS transmission instruction unit 303 can transmit the SRS transmission instruction to the terminal device, for example, after the above-described RA procedure is completed and before the Cell switch command is transmitted. In addition, the SRS transmission instruction unit 303 can transmit the SRS transmission instruction to the terminal device in, for example, the Cell switch command. The SRS transmission instruction can be notified to the terminal device using, for example, a MAC CE or DCI. Note that the SRS transmission instruction unit 303 can notify the terminal device of, for example, information designating the beam to be used for transmitting the SRS, together with an SRS transmission instruction. For example, the SRS transmission instruction unit 303 notifies the terminal device of information designating the beam to be used when transmitting the SRS using each of one or more transmission settings. In addition, the SRS transmission instruction unit 303 can notify the terminal device of information indicating whether or not each of a plurality of beams usable by the terminal device is to be used for SRS transmission. This notification can be performed, for example, as a notification of the activation/deactivation setting of the TCI state. In addition, for example, when identification information of a signal to be measured in a terminal device, such as an SSB or CSI-RS, and a beam that can receive the signal to be measured with sufficient radio quality are stored in the terminal device in association with each other, notification of the identification information of the signal to be measured may be performed. In this case, the terminal device transmits the SRS using a beam associated with the identification information of the signal to be measured.

The inter-base station communication unit 304 communicates with handover-destination candidate base station devices. The inter-base station communication unit 304 is used to receive, for example, information for an RA procedure in the handover-destination candidate base station device and information for SRS transmission by the terminal device. In addition, the inter-base station communication unit 304 can notify another base station device to which the RA preamble is to be transmitted that the connected terminal device is to transmit the RA preamble, for example. In addition, the inter-base station communication unit 304 can receive, for example, a message (message 2 or message 4) to be transmitted from a handover-destination candidate base station device to a terminal device, in an RA procedure. In addition, a TA value calculated in the handover-destination candidate base station device can be acquired via the inter-base station communication unit 304. Note that the signal received by the inter-base station communication unit 304 can be transferred to the terminal device via, for example, the RACH instruction unit 302 or the like. In addition, the inter-base station communication unit 304 can receive the SRS transmission instruction for the terminal device from the handover-destination candidate base station device. In this case, the SRS transmission instruction unit 303 can instruct the terminal device to transmit the SRS based on the instruction received from the handover-destination candidate base station device. Note that this is just one example, and the inter-base station communication unit 304 can transmit an SRS transmission instruction to the connected terminal device without relying on an instruction from the handover-destination candidate base station device, and notify the handover-destination candidate base station device that the instruction has been transmitted. Note that the inter-base station communication unit 304 receives information designating a beam to be used when transmitting an SRS from the handover-destination candidate base station device. In this way, the inter-base station communication unit 304 communicates various types of information related to the RA procedure and SRS transmission associated with handover to the handover-destination candidate base station device with that base station device.

The handover instruction unit 305 instructs the terminal device to execute handover in response to the terminal device entering a state where it is to execute handover, for example, when the reception quality of a radio signal from another handover-destination base station device at the terminal device becomes higher than a predetermined level or more than the radio quality between the base station device and the terminal device. The handover instruction unit 305 transmits, to the terminal device, a Cell switch command including, for example, a cell identifier that can specify the handover-destination base station device, and the like. Upon receiving this command, the terminal device changes the base station device that is the connection destination to the designated base station device, and completes the handover.

FIG. 4 shows an example of a functional configuration of the terminal device. The terminal device includes, for example, an RRC setting unit 401, an instruction reception unit 402, a RACH processing unit 403, an SRS transmission processing unit 404, and a handover processing unit 405. Note that FIG. 4 shows only functions that are particularly related to this embodiment, and omits illustration of various other functions that the terminal device can have. For example, it goes without saying that the terminal device has other functions that terminal devices compliant with 5G, subsequent standards thereof, and the like generally have. In addition, the functional blocks in FIG. 4 are shown schematically, and the respective functional blocks may be realized as an integrated whole, or may be further subdivided. In addition, each function in FIG. 4 may be realized, for example, by the processor 201 executing a program stored in the ROM 202 or the storage device 204, or may be realized, for example, by a processor present inside the communication circuit 205 executing predetermined software. Note that the above-described details of the processing executed by each functional unit will not be described here, but only the general function thereof will be outlined.

The RRC setting unit 401 receives an RRC-layer message from a base station device that is a connection destination, and performs connection setting processing with a handover-destination candidate base station device. Note that the RRC setting unit 401 holds the setting of the connected base station device and the setting of the handover-destination candidate base station device in parallel. Note that in this embodiment, the RRC setting unit 401 can acquire and store one or more pieces of setting information for SRS transmission for each of the handover-destination candidate base station devices from the base station device that is the connection destination. The instruction reception unit 402 receives an RA preamble transmission instruction or an SRS transmission instruction from the connected base station device. The transmission of the RA preamble can be instructed by a PDCCH order. In addition, the SRS transmission instruction is received when the Cell switch command is received or before the command is issued, and at that time, a MAC CE or DCI can be used. In response to receiving the RA preamble transmission instruction from the instruction reception unit 402, the RACH processing unit 403 transmits an RA preamble to the handover-destination candidate base station device. Here, the sequence for generating the RA preamble and information on the radio resources for receiving the RA preamble at the handover-destination candidate base station device can be received from the connected base station device via the instruction reception unit 402. Note that the information on the sequence and radio resources may be acquired from the system information transmitted by the handover-destination candidate base station device.

In response to the instruction reception unit 402 receiving the SRS transmission instruction, the SRS transmission processing unit 404 transmits an SRS for measurement by the handover-destination candidate base station device. The SRS transmission processing unit 404 generates the SRS using the setting information received by the RRC setting unit 401, and transmits the SRS using, for example, a beam specified by the SRS transmission instruction received by the instruction reception unit 402. Note that, for example, if the SRS transmission setting is semi-persistent or periodic, the SRS transmission processing unit 404 repeatedly transmits the SRS. In this case, the SRS transmission processing unit 404 can stop transmitting the SRS when, for example, the instruction reception unit 402 receives an instruction to stop transmitting the SRS. Note that the SRS transmission period may be set in advance (e.g., in the SRS transmission instruction), in which case the stop instruction need not be received. In addition, for example, the setting information received in advance by the RRC setting unit 401 may include beam setting information, in which case the transmission instruction may indicate whether to transmit the SRS using the beam setting or transmit the SRS using another beam designated in the SRS transmission instruction.

The handover processing unit 405 changes the base station device that is the connection destination in response to receiving a handover command (Cell switch command) from the connected base station device. Note that due to the actions of the RRC setting unit 401 and the RACH processing unit 403, the terminal device does not need to execute the RRC layer setting processing and RA procedure again with the handover-destination candidate base station device. For this reason, for example, if the terminal device is notified in the received command of the allocation of uplink radio resources at the handover-destination candidate base station device, the terminal device can immediately transmit uplink signals using those radio resources. Furthermore, the SRS transmission processing unit 404 can specify the setting of the narrow beam for uplink communication at the handover-destination base station device, at the time of handover or in a short time after the handover. For this reason, the handover-destination base station device can notify the terminal device of information designating the beam to be used, together with the allocation of the uplink radio resources described above, for example.

### Flow of Processing

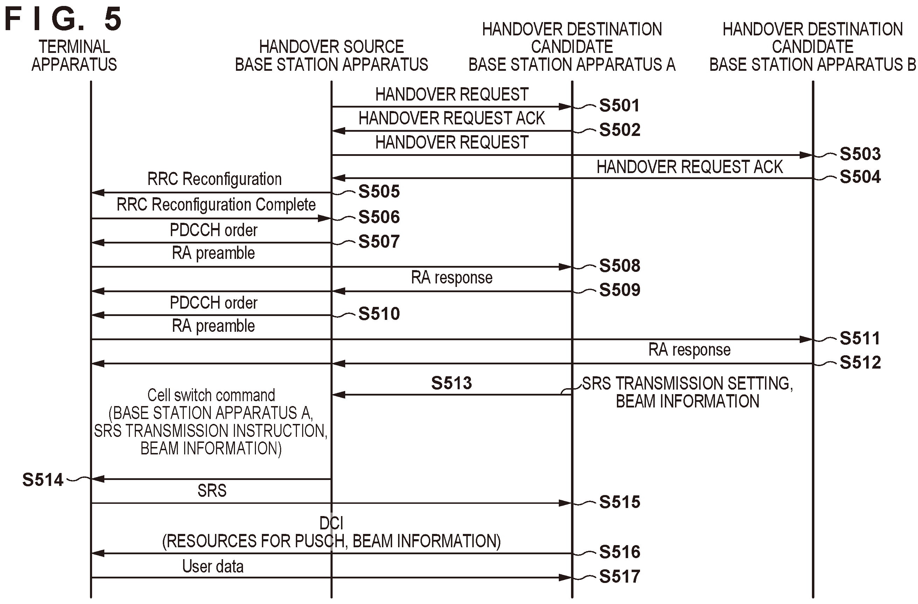

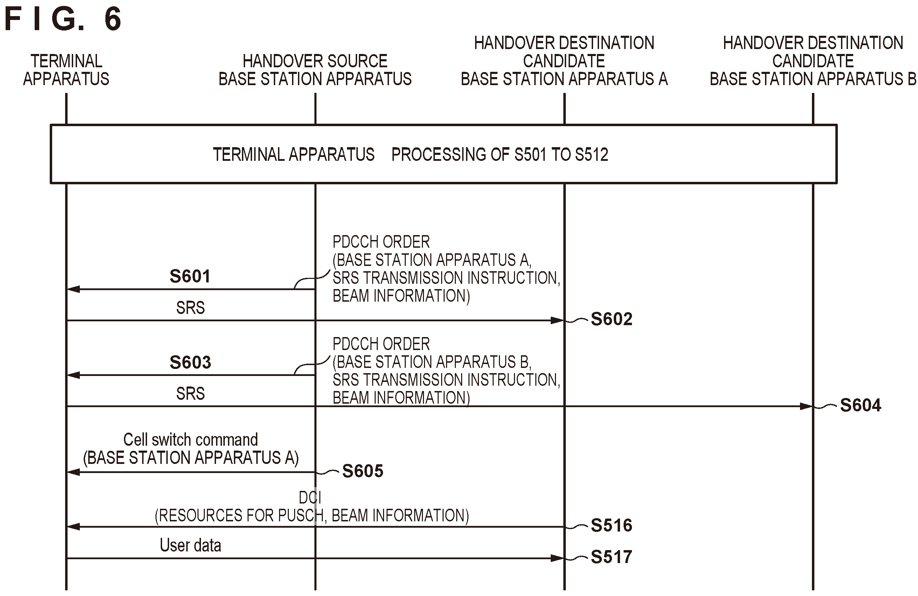

FIGS. 5 and 6 show an example of a flow of processing executed in the wireless communication system of this embodiment. FIG. 5 shows an example of a flow of processing performed when an SRS transmission instruction is notified to the terminal device in a Cell switch command. On the other hand, FIG. 6 shows an example of the flow of processing when an SRS transmission instruction is notified to the terminal device using, for example, a PDCCH order (DCI) before transmitting the command. Here, in FIGS. 5 and 6, it is assumed that a connection has been established between the handover-source base station device and the terminal device. Note that the examples shown in FIGS. 5 and 6 are merely examples, and modifications such as those described above can be made to each procedure. For example, in the example of FIG. 6, an example is shown in which an SRS transmission instruction is transmitted and received by a PDCCH order, but this transmission instruction may be transmitted and received by a MAC CE, for example.

First, an example of the processing flow in FIG. 5 will be described. The handover-source first base station device first transmits a HANDOVER REQUEST message to the second base station devices (base station device A and base station device B in FIG. 5) that form adjacent cells that are handover-destination candidates of the terminal device (step S501, step S503). Upon receiving this message, the second base station device transmits a HANDOVER REQUEST ACK message including information on communication parameters to be used when the terminal device connects, SRS setting information, and the like to the first base station device (step S502, step S504). Then, the first base station device notifies the terminal device of an RRC Reconfiguration message including the communication parameters and the like notified from the second base station device (step S505). Note that the first base station device may compile separate messages for respective pieces of information on a plurality of candidates for handover-destination base station devices and notify the terminal device of the compiled messages, or may notify the terminal device of a message that includes all of this information. Upon receiving this message, the terminal device transmits an RRC Reconfiguration Complete message to the first base station device, thereby completing the setting processing using the RRC-layer message. This processing eliminates the need for the terminal device to perform RRC layer setting processing after handover to the second base station device is instructed by the first base station device. In addition, the terminal device becomes able to transmit an SRS in accordance with an SRS transmission instruction notified in the handover instruction or before receiving the instruction. Note that FIG. 5 shows an example of a flow of setting processing performed when there are two handover-destination candidate base station devices, but similar setting processing can be executed for one candidate base station device or for three or more candidate base station devices.

Next, the first base station device instructs the terminal device to transmit an RA preamble to the second base station device (step S507). Here, this instruction can include information designating the sequence that the terminal device is to use to generate the RA preamble and the radio resources on which the RA preamble is to be transmitted. In addition, the radio resources on which the RA preamble is to be transmitted may be specified based on, for example, system information in the second base station device transmitted from the second base station device and measured by the terminal device. That is, this information does not need to be acquired from the connected base station device. In addition, the sequence to be used when generating the RA preamble and the radio resource on which the RA preamble is to be transmitted may be specified in advance. In one example, in step S505, information on the radio resource on which this sequence and the RA preamble are to be transmitted may be notified to the terminal device. The terminal device transmits the RA preamble to the second base station device in accordance with the instruction (step S508). At this time, the first base station device may notify the second base station device that the terminal device is planning to transmit the RA preamble. In addition, the first base station device can notify the second base station device of information on the sequence that the terminal device uses to generate the RA preamble. This enables the second base station device to detect the RA preamble transmitted by the terminal device. Note that this is just one example, and notification of the fact that the terminal device plans to transmit the RA preamble may be performed implicitly, for example, by the HANDOVER REQUEST in step S501 or step S503. In this case, the second base station device may designate the sequence that the terminal device is to use to generate the RA preamble in the HANDOVER REQUEST ACK in step S502 or step S504. Thereafter, for example, the second base station device that has received the RA preamble transmits an RA response to the terminal device via the first base station device (step S509). The second base station device can specify the TA value used when the terminal device is connected to the second base station device based on the reception timing of the RA preamble, and can notify the terminal device of the TA value by the RA response. Note that the RA procedure includes transmission of a physical uplink shared channel (message 3) from the terminal device to the second base station device after the RA response, and transmission of a contention resolution message (message 4) from the second base station device to the terminal device via the first base station device after message 3, but these are not shown in FIG. 5. Note that here, it is sufficient to specify the TA value, and it is not necessary to transmit message 3 or message 4. A similar RA procedure can also be executed between the terminal device and the base station device B (steps S510 to S512).

For example, in parallel with the RA procedure, the terminal device measures radio signals (e.g., SSB) transmitted from each of the handover-destination candidate second base station devices, and notifies the first base station device of the measurement result (not shown). Here, the first base station device can notify the second base station device of the measurement result. In this case, the second base station device can roughly specify the beam to be used for communication with the terminal device. The second base station device may transmit CSI-RS and cause the terminal device to measure it in order to form an even narrower beam. In this case, the second base station device can transmit CSI-RS setting information to the first base station device and cause the first base station device to transfer the setting information to the terminal device. The terminal device measures the CSI-RS based on the setting information and reports the measurement result to the connected first base station device. The first base station device then transfers the measurement result to the second base station device. As a result, the second base station device can transmit a downlink signal using a narrow beam immediately after the terminal device has been handed over to the second base station device.

In addition, the first base station device can determine that handover is to be performed according to the measurement result of a radio signal (e.g., SSB) notified from the terminal device. For example, when a predetermined condition is met, such as when the radio quality of the signal from the base station device A becomes higher than the radio quality of the signal from the first base station device by a predetermined level or more, the first base station device may determine that the terminal device is to be handed over to the base station device A. Based on this determination, the first base station device transmits a Cell switch command instructing that handover is to be performed to the terminal device (step S514). The terminal device executes handover to base station device A according to this command. Note that this command includes identification information that can specify the handover-destination base station device A. In this processing example, this command further includes SRS transmission instruction information and information specifying the beam to be used when transmitting the SRS. Note that the SRS transmission instruction information can include information indicating which setting information is to be used to transmit the SRS, among the SRS transmission setting information for the base station device A designated as the handover destination and received in step S505. However, if there is only one piece of SRS transmission setting information, or the like, the information designating that setting information does not need to be included in the command.

Note that the SRS transmission setting information to be used and the information designating the beam to be used can be acquired from the handover-destination base station device A (step S513). In one example, before the command of step S514 is issued, the base station device A can autonomously transmit, to the first base station device, setting information and the like to be used for transmitting the SRS if it is assumed that the base station device A will be the handover destination of the terminal device. In this case, for example, the base station device B may also transmit similar information to the first base station device. In addition, before the command of step S514 is issued, the first base station device may notify the base station device A that the terminal device is to be handed over to the base station device A, and in response to the notification, the base station device A may transmit, to the first base station device, setting information and the like to be used for SRS transmission. The SRS transmission setting information to be used can be designated using, for example, SRS Resource Setid and srs-Resourceid. The information designating the beam can be information indicating whether to activate or deactivate the setting information for forming each of the plurality of beams that can be used by the terminal device. Note that information directly designating a beam so as to use a specific beam may be notified to the terminal device. For example, the TCI may be used to specify the beam, or if a beam with optimal radio quality of the SSB or CSI-RS or a beam that exceeds a predetermined quality level is stored in the terminal device in association with information that can specify the SSB or CSI-RS (information such as identification information or information on the radio resources on which these signals are transmitted), information capable of specifying the SSB or CSI-RS may be used as information designating the beam. Upon receiving information capable of specifying the SSB or CSI-RS, the terminal device specifies that a beam stored in association with the SSB or CSI-RS is designated. Note that if the SRS transmission setting information received in step S505 includes first information designating a beam, and second information designating a beam is received in step S514, the first information can be replaced (at least temporarily) by the second information. Then, the terminal device transmits the SRS using the designated beam (step S515).

By measuring this SRS, the base station device A can specify the beam that the terminal device is to use when transmitting an uplink signal. Then, when transmitting the DCI to allocate radio resources for transmitting user data (PUSCH) in the uplink (step S516), the base station device A can include information designating the specified beam to be used. The information designating the beam here may be, for example, an SRS resource indicator. Upon receiving this DCI, the terminal device transmits uplink user data using the designated beam and the designated radio resource (step S517).

Conventionally, after a handover command such as that in step S514 is transmitted and the terminal device connects to the base station device A, the base station device A transmits an SRS transmission start instruction to the terminal device, and then the SRS is transmitted. In contrast to this, in this processing example, an SRS transmission instruction is transmitted to the terminal device at the timing when a handover command is issued, and therefore the terminal device can start SRS transmission early. As a result, a narrow beam to be used in uplink communication can be quickly determined, and the efficiency of wireless communication can be improved.

Next, a processing example shown in FIG. 6 will be described. In the processing of FIG. 6, an instruction to transmit an SRS is transmitted to the terminal device before the Cell switch command is transmitted. Note that in this processing example, the same processing as steps S501 to S512 in FIG. 5 is first performed. Thereafter, for example, the first base station device transmits an SRS transmission instruction to the terminal device. For example, the first base station device transmits a PDCCH order (DCI) including an SRS transmission instruction for the base station device A and beam information to the terminal device (step S601). The information transmitted here is similar to the information transmitted to the terminal device in step S514 in FIG. 5, and can be configured based on information previously notified from the base station device A to the first base station device, in the same manner as in step S513. In accordance with this SRS transmission instruction, the terminal device transmits the SRS using the setting information for the base station device A and the designated beam (step S602). By measuring this SRS, the base station device A can determine the beam that the terminal device will use in uplink communication if it is assumed that the terminal device is connected to the base station device A. Similarly, the first base station device transmits a PDCCH order (DCI) including an SRS transmission instruction for the base station device B and beam information to the terminal device (step S603), and the terminal device transmits the SRS using the setting information for the base station device B and the designated beam in accordance with this SRS transmission instruction (step S604). By measuring this SRS, the base station device B can also determine the beam that the terminal device will use in uplink communication if it is assumed that the terminal device is connected to the base station device B. Note that the first base station device may transmit an instruction to the terminal device to transmit an SRS to all of the handover-destination candidate base station devices, or may transmit an instruction to the terminal device to transmit an SRS to only some of the candidate base station devices. For example, the terminal device may continuously perform measurement of the SSB and the like and notify the first base station device of the measurement result, and the first base station device may determine a handover-destination candidate base station device to which to transmit the SRS according to the measurement result.

Note that the first base station device can transmit an SRS measurement instruction including information capable of specifying the base station device A or the base station device B, but this information does not necessarily need to be included. For example, if there is only one handover-destination candidate second base station device, the information for specifying the second base station device may be omitted. In addition, a unique identifier may be assigned to each of a plurality of pieces of SRS transmission setting information relating to a plurality of handover-destination candidate base station devices, and the identifier may be notified to the terminal device. In this case, it is sufficient for the terminal device to be able to transmit the SRS for any of the candidate base station devices, and therefore the terminal device does not need to be notified of which base station device each of the plurality of pieces of setting information is for. In addition, the information capable of specifying the handover-destination candidate base station device can be, for example, a physical cell identifier (PCI), but there is no limitation to this. For example, when setting the RRC layer, identification information such as the PCI of each base station device may be associated with a predetermined index and notified to the terminal device, and the predetermined index may be notified to the terminal device as information capable of specifying the base station device when instructing SRS transmission. For example, there are 1008 PCIs available in 5G, and one of them is assigned to each base station device. On the other hand, the number of handover-destination candidates is limited, and even if an index that can uniquely specify each of the candidates is assigned, the index can be expressed with fewer bits than the number of bits required to express a PCI. For this reason, such an index may be used to reduce the number of bits in the PDCCH order, for example.

Thereafter, upon judging that handover is to be performed according to the measurement result of the radio signal (e.g., SSB) notified from the terminal device, the first base station device transmits, to the terminal device, a Cell switch command instructing that handover is to be executed (step S605). The terminal device executes handover to the base station device A according to this command. Note that this command includes information on the base station device A indicating the handover destination. On the other hand, the base station device A has already measured the SRS in step S602 and has completed determining the beam that the terminal device is to use for uplink communication. For this reason, the command in step S605 does not include an instruction to transmit an SRS, and there is no need to transmit an SRS transmission instruction after the command in step S605. Then, when transmitting the DCI (step S516), for example, to allocate radio resources for transmitting user data (PUSCH) in the uplink, the base station device A can include information designating the beam to be used, which was specified in step S602. Upon receiving this DCI, the terminal device transmits uplink user data using the designated beam and the designated radio resource (step S517). In this way, in this processing example, an SRS transmission instruction is transmitted to the terminal device before a handover command is issued, and therefore immediately after handover is performed according to that command, the terminal device can perform uplink communication using a narrow beam.

Note that in the above-described example, an example is shown in which the RA procedure is executed before the transmission and reception of the Cell switch command, but the RA procedure does not necessarily need to be executed at this timing. For example, in the above-described embodiment, the handover-source and handover-destination base station devices have been described as providing one cell, but these base station devices may provide a plurality of cells. At this time, if the handover-source base station device remains unchanged and handover to another cell (using a different frequency band, for example) is performed, the RA procedure for establishing uplink synchronization can be omitted. Note that in the above description, the term "base station device" may be read as "cell". That is, in the above description, terms such as "the handover-source first base station device" and " the handover-destination candidate second base station device" are used, but these may also be read as "the handover-source first cell" and "the handover-destination candidate second cell". However, it should be noted that the entity that transmits and receives signals is the base station device that provides each cell. In addition, in the above-described example, an example has been described in which the terminal device transmits an SRS, but an uplink reference signal different from the SRS may also be used. In this way, in the above-described embodiment, it is sufficient that the SRS transmission instruction is notified to the terminal device not after the handover, but in the command instructing the handover or before the command, and SRS transmission is started, and various modifications and alterations are possible for other matters.

As described above, according to this embodiment, it is possible to significantly reduce the amount of time from when the handover-source base station device determines that the terminal device is to actually be handed over to another base station device to when the terminal device starts communicating user data using a narrow beam used for uplink communication. This will enable contribution to Goal 9 of the United Nations' Sustainable Development Goals (SDGs), which is to "build resilient infrastructure, promote sustainable industrialization and foster innovation".

The invention is not limited to the foregoing embodiments, and various variations/changes are possible within the spirit of the invention.

This application claims priority based on Japanese Patent Application No. 2023-125628, filed August 1, 2023, the entire contents of which are incorporated herein by reference.

## Claims

1. A terminal device comprising:
reception means for receiving, from a connected base station device, setting information of an uplink reference signal for measurement in another base station device that provides a handover-destination candidate cell, and then receiving, from the base station device, a command instructing handover to a cell provided by the other base station device, the command including an instruction to transmit the uplink reference signal and information designating a beam to be used for transmitting the uplink reference signal;
execution means for executing handover to the cell provided by the other base station device based on the command; and
transmission means for transmitting the uplink reference signal to the other base station device using the setting information and the information designating the beam, in response to receiving the command from the other base station device and without receiving an instruction to transmit the uplink reference signal from the other base station device.

2. The terminal device according to claim 1,
wherein the information designating the beam is information indicating activation or deactivation of a plurality of beams usable by the terminal device.

3. The terminal device according to claim 2,
wherein the information indicating activation or deactivation of the plurality of beams usable by the terminal device is indicated using a Transmission Configuration Indicator (TCI) state,

4. The terminal device according to any one of claims 1 to 3, further comprising:
measurement means for measuring each of a plurality of predetermined downlink signals transmitted from the other base station device, using each of the plurality of beams usable by the terminal device; and
storage means for storing each of the plurality of predetermined signals in association with any one of the plurality of beams, based on the measurement results for the plurality of predetermined signals,
wherein the information designating the beam is information capable of specifying any one of the plurality of predetermined signals, and
the transmitting means transmits the uplink reference signal using the beam stored in association with the predetermined signal specified based on the information.

5. The terminal device according to any one of claims 1 to 4,
wherein the uplink reference signal is a sounding reference signal (SRS).

6. A base station device comprising:
receiving means for receiving, from another base station device that provides a handover-destination candidate cell for a connected terminal device, setting information of an uplink reference signal for measurement in the other base station device, and then receiving information designating a beam to be used by the terminal device when the terminal device transmits the uplink reference signal using the setting information; and
transmission means for transmitting the setting information to the terminal device, and then, when handing over the terminal device to a cell provided by the other base station device, transmitting a command instructing handover to the cell provided by the other base station device, the command including an instruction to transmit the uplink reference signal and information designating a beam to be used for transmitting the uplink reference signal.

7. The base station device according to claim 6,
wherein the transmitting means transmits, to the terminal device, the command including, as the information designating the beam, information indicating activation or deactivation of a plurality of beams usable by the terminal device.

8. The base station device according to claim 7,
wherein the information indicating activation or deactivation of a plurality of beams usable by the terminal device is indicated using a Transmission Configuration Indicator (TCI) state.

9. The base station device according to any one of claims 6 to 8,
wherein the terminal device stores each of a plurality of predetermined downlink signals transmitted from the other base station device in association with any one of the plurality of beams usable by the terminal device, and
the transmission means transmits, to the terminal device, the command including, as information specifying the beam, information capable of specifying any one of the plurality of predetermined signals.

10. The base station device according to any one of claims 6 to 9,
wherein the uplink reference signal is a sounding reference signal (SRS).

11. A control method to be executed by a terminal device, comprising:
receiving, from a connected base station device, setting information of an uplink reference signal for measurement in another base station device that provides a handover-destination candidate cell;
receiving the setting information and then receiving, from the base station device, a command instructing handover to a cell provided by the other base station device, the command including an instruction to transmit the uplink reference signal and information designating a beam to be used for transmitting the uplink reference signal;
executing handover to the cell provided by the other base station device based on the command; and
transmitting the uplink reference signal to the other base station device using the setting information and information designating the beam, in response to receiving the command from the base station device and without receiving an instruction to transmit the uplink reference signal from the other base station device.

12. A control method to be executed by a base station device, comprising:
receiving, from another base station device that provides a handover-destination candidate cell for a connected terminal device, setting information of an uplink reference signal for measurement in the other base station device;
transmitting the setting information to the terminal device;
receiving information designating a beam to be used by the terminal device when the terminal device transmits the uplink reference signal using the setting information; and
transmitting, when handing over the terminal device to the cell provided by the other base station device, a command instructing handover to the cell provided by the other base station device, the command including an instruction to transmit the uplink reference signal and information designating a beam to be used for transmitting the uplink reference signal.

13. A program for causing a computer included in a terminal device to:
receive, from a connected base station device, setting information of an uplink reference signal for measurement in another base station device that provides a handover-destination candidate cell;
receive the setting information and then receive, from the base station device, a command instructing handover to a cell provided by the other base station device, the command including an instruction to transmit the uplink reference signal and information designating a beam to be used for transmitting the uplink reference signal;
execute handover to the cell provided by the other base station device based on the command; and
transmit the uplink reference signal to the other base station device using the setting information and information designating the beam, in response to receiving the command from the base station device and without receiving an instruction to transmit the uplink reference signal from the other base station device.

14. A program for causing a computer included in a base station device to:
receive, from another base station device that provides a handover-destination candidate cell for a currently connected terminal device, setting information of an uplink reference signal for measurement in the other base station device;
transmit the setting information to the terminal device;
receive information designating a beam to be used by the terminal device when the terminal device transmits the uplink reference signal using the setting information; and
transmit, when handing over the terminal device to the cell provided by the other base station device, a command instructing handover to the cell provided by the other base station device, the command including an instruction to transmit the uplink reference signal and information designating a beam to be used for transmitting the uplink reference signal.
